# EUROPEAN PATENT APPLICATION

(11) **EP 3 751 314 A1**
(43) Date of publication of application: **16.12.2020**
(21) Application number: 19750694.2
(22) Date of filing: 09.01.2019
(51) Int. Cl.: G01S 19/07, H01Q 1/12, G01S 19/41

(54) **REFERENCE STATION DEVICE**

(30) Priority: 08.02.2018 JP 2018020903
(71) Applicant: Yanmar Power Technology Co., Ltd., Osaka-shi Osaka 530-0013 (JP)
(72) Inventor: HANADA, Yosuke, Osaka-shi, Osaka 530-0013 (JP); ISHINO, Tatsuya, Osaka-shi, Osaka 530-0013 (JP)
(74) Representative: Poindron, Cyrille
(86) International application number: PCT/JP2019/000352
(87) International publication number: WO 2019/155812

(57) **Abstract**

Provided is a reference station device that is capable of high-accuracy positioning whilst maintaining stability, even when configured so as to be portable. This reference station device 10 comprises: communications antennas 11 that conduct wireless communications with a mobile station; a positioning antenna 19 that receives a positioning signal from a positioning satellite; and a control unit 30 that controls the operation of the positioning antenna 19 and the communications antennas 11. The device comprises: a reference station body 20 to which the control unit 30 and the positioning antenna 19 are mounted; a communications antenna support 12 which supports the communications antennas 11 above the reference station body 20; and a communications antenna mounting part 16 with which the communications antenna support 13 is detachably mounted to the reference station body 20.

## Description

### TECHNICAL FIELD

The present invention relates to a reference station device including a communications antenna for performing wireless communication with a mobile station, a positioning antenna for receiving a positioning signal from a positioning satellite, and a control unit for controlling operation of the positioning antenna and the communications antenna.

### BACKGROUND ART

In recent years, in order to efficiently perform agricultural works by use of a work vehicle at a work site, etc., an automated driving system for controlling the work vehicle to automatically drive has been developed (for example, see Patent Literature 1). In such an automated driving system, positioning antennas for receiving positioning signals from positioning satellites are installed on both a work vehicle, which operates as a mobile station that drives a work site, and a reference station device, which operates as a reference station installed in the vicinity of the work site, so that positioning of the current position of the work vehicle, or the mobile station, is performed with high precision by use of positioning signals received by both of the positioning antennas of the mobile station and the reference station. In addition, it is desired that the reference station device is configured to be portable since it is preferable that the reference station device utilized in such an automated driving system is installed at an appropriate position according to the driving area of the work vehicle.

Note that, in the field of communication networks for mobile terminals, a portable base station device (access point) that can be easily installed has been provided (for example, see Patent Literature 2). However, the present portable base station device of Patent Literature 2 is intended for communication with a terminal device and is not intended for communication with a positioning satellite as performed by a reference station device utilized for an automated driving system of a work vehicle.

### CITATION LIST

### Patent Literature

Patent Literature 1: Japanese Unexamined Patent Application Publication No. 2014-085168
Patent Literature 2: Japanese Unexamined Patent Application Publication No. 2007-259289

### DISCLOSURE OF INVENTION

### PROBLEMS TO BE SOLVED BY THE INVENTION

As for a reference station device utilized for an automated driving system, it is preferable that a communications antenna for performing wireless communication with a mobile station is installed at a high position in order to achieve a preferable state of communication with a work vehicle, which operates a mobile station. On the other hand, since a positioning antenna has a relatively heavy weight, in a case where the positioning antenna is installed at a high position, the positioning antenna becomes unstable and easily falls, and deviation in positioning easily occurs.

In view of the present situation, the main object of the present invention is to provide a reference station device capable of performing positioning with high precision while maintaining a stable posture even in a case where the reference station device is configured to be portable.

### MEANS FOR SOLVING THE PROBLEMS

According to the first characteristic configuration of the present invention, a reference station device, which includes a communications antenna for performing wireless communication with a mobile station, a positioning antenna for receiving a positioning signal from a positioning satellite, and a control unit for controlling operation of the positioning antenna and the communications antenna, includes a reference station body supported on a ground surface and to which the control unit and the positioning antenna are attached, a communications antenna support configured to support the communications antenna at an upper position compared to the reference station body, and a communications antenna mounting part configured to detachably attach the communications antenna support to the reference station body.

According to the present configuration, the positioning antenna for receiving a positioning signal from a positioning satellite is directly attached to the reference station body, which is stably supported on the ground surface, as with the control unit. Therefore, it is possible to stabilize the positioning antenna and realize positioning with high precision. On the other hand, the communications antenna for performing wireless communication with a mobile station is supported by the communications antenna support, which is attached to the reference station body. Therefore, it is possible to place the communications antennas at the highest position possible, which is higher than the reference station body, while the reference station body is placed at a low position, so as to realize preferable communication with the mobile station side. Furthermore, with the communications antenna mounting part, the communications antennas support for supporting the communications antennas can be detached from the reference station body, so that transportation in a compact state is possible. Therefore, according to the present invention, it is possible to provide a reference station device capable of performing positioning with high precision while maintaining a stable posture even through the reference station device is configured to be portable.

According to the second characteristic configuration of the present invention, the reference station body interiorly houses the control unit and includes an opening and closing door which is able to open and close a front surface side of the control unit.

According to the present configuration, it is possible to open and close the front surface side of the control unit with the opening and closing door in a state where the control unit is housed in the reference station body. Therefore, by making the opening and closing door in an opened state, for example, it is possible to easily operate an operation unit on the front surface side of the control unit, and, on the other hand, by making the opening and closing door in a closed state, it is possible to prevent the control unit from being erroneously operated and preferably avoid the control unit from deteriorating due to sunlight or from breaking due to rain or dust, etc.

According to the third characteristic configuration of the present invention, the communications antenna support includes a support stick extending in a vertical direction and the communications antenna is detachably attached to an upper end part of the support stick, and the communications antenna mounting part is able to hold the support stick, which is provided on a side of the reference station body and whose lower end part of the support stick is in contact with the ground surface.

According to the present configuration, with the communications antenna mounting part, the support stick having the communications antennas attached to the upper end part thereof can be provided on a side of the reference station body and held where the lower end part thereof is in contact with the ground surface. Therefore, since the lower end part of the support stick is in contact with the ground surface while supporting the communications antennas at an appropriate height, it is possible to stabilize the posture of the support stick and the communications antennas attached to the upper end part of the support stick. Furthermore, since the lower end part of the support stick is in contact with the ground surface, the load of the support stick and the communications antennas can be supported on the ground surface, and it is possible to prevent the load from being applied to the reference station body side. Therefore, it is possible to stabilize the postures of the reference station body as well as the positioning antenna attached thereto, so as to prevent the reference station body from falling and to further improve the precision of positioning by the positioning antenna.

According to the fourth characteristic configuration of the present invention, the reference station body includes a support leg mounting part detachably attached to a support leg provided upright on the ground surface.

According to the present configuration, with the support leg mounting part, it is possible to detach the reference station body from the support leg, provided upright on the ground surface, so as to make transportation even more easily. In addition, since the reference station body includes the support leg mounting part, it is possible to attach the reference station body to various kinds of support legs, such as a tripod and a pile, as appropriate.

### BRIEF DESCRIPTION OF DRAWINGS

FIG.1 is a diagram illustrating a schematic configuration of an automated driving system and an installation state of a reference station device.
FIG.2 is a block diagram illustrating a state of controlling communication of a reference station and a mobile station in the automated driving system.
FIG.3 is a diagram illustrating a state of an external appearance of the reference station device.
FIG.4 is a diagram illustrating a configuration of a communications antenna support.
FIG.5 is a diagram illustrating states of attaching the communications antenna support and a support leg to a reference station body of the reference station device.
FIG.6 is a diagram illustrating a state of the back surface side of the reference station body of the reference station device.
FIG.7 is a diagram illustrating a state of the front surface side of the reference station body of the reference station device.
FIG.8 is a diagram illustrating a state in which an opening and closing door of the reference station body of the reference station device is in an opened state.
FIG.9 is a diagram illustrating a state in which the reference station device is stored in a storage box.
FIG. 10 is a diagram for explaining a procedure of storing the reference station device in the storage box.
FIGS.11A and 11B are a diagram illustrating a configuration of a storage frame for housing a support stick and the support leg.
FIG.12 is a diagram for explaining a procedure of attaching the storage frame to a work vehicle.

### DESCRIPTION OF EMBODIMENTS

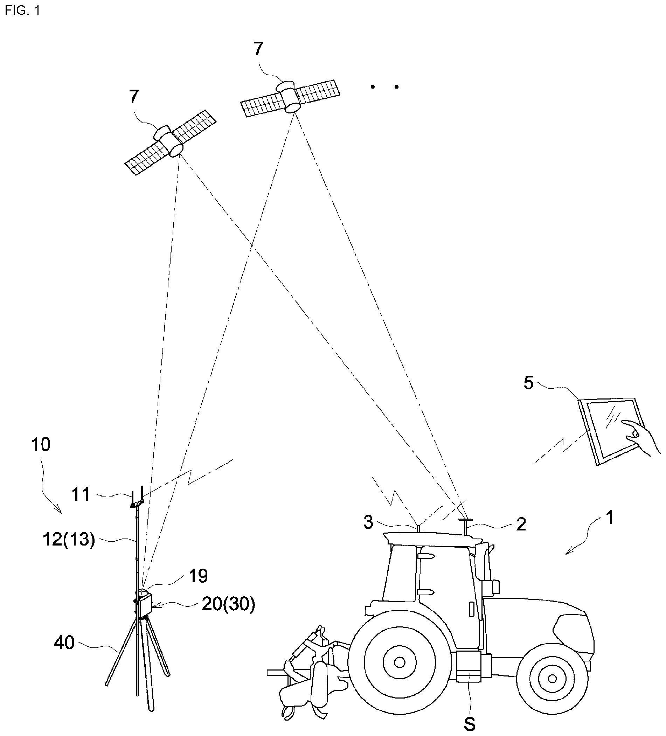

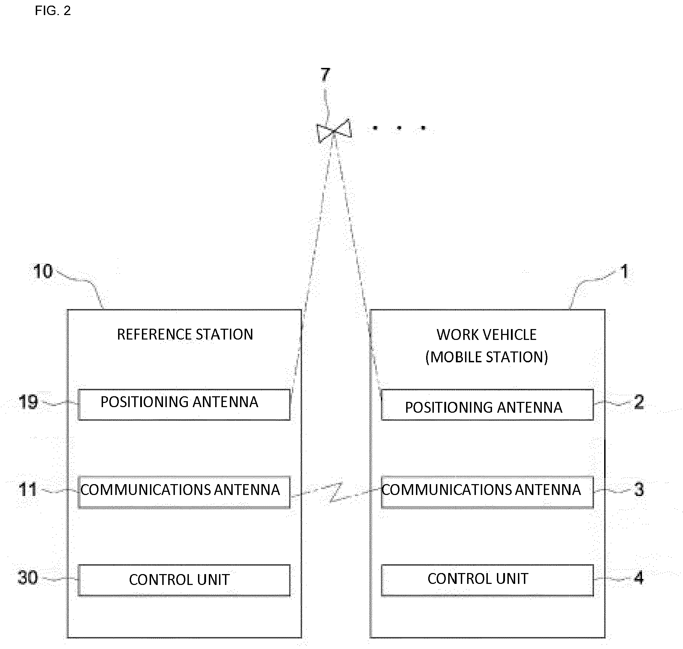

An explanation is given of an embodiment of the reference station device according to the present invention with reference to the drawings. As illustrated in FIG.1 and FIG.2, the reference station device 10 according to the present embodiment is configured to be utilized as a reference station in an automated driving system for controlling the work vehicle 1, which operates a mobile station, to automatically drive along a predetermined route. Note that, although a tractor is illustrated as an example of the work vehicle 1 in the present embodiment, a walking-type and riding-type work vehicle, such as a rice transplanter, a combine, a civil engineering and construction work equipment, and a snowplow, may be employed as the work vehicle 1, in addition to a tractor.

### (Automated Driving System)

First, an explanation is given of the configuration of the automated driving system using the reference station device 10 of the present embodiment. In the automated driving system, a positioning antenna 2 that receives positioning signals from positioning satellites 7, with which a satellite positioning system (NSS: Navigation Satellite System) is configured, is installed, for example, on the roof top surface of the cabin of the work vehicle 1 that drives on the work site, so that the work vehicle 1 operates as a mobile station. On the other hand, the reference station device 10 including a positioning antenna 19 that receives positioning signals from the same positioning satellites 7 as those of the work vehicle 1 side is installed in the vicinity of the work site where the work vehicle 1 automatically drives, so that the reference station device 10 operates as a reference station. The automated driving system is configured to perform positioning of the current position of the work vehicle 1 by use of the positioning signals received by the reference station device 10 and the work vehicle 1, respectively.

As illustrated in FIG.2, the work vehicle 1 is provided with a control unit 4, which is configured with a CPU and a storage device, etc., and a communications antenna 3 that performs wireless communication with communications antennas 11 of the reference station device 10. On the other hand, the reference station device 10 is provided with a control unit 30, which is configured with a CPU and a storage device, etc., and the communications antennas 11 that perform wireless communication with the communications antenna 3 of the work vehicle 1. Each of the communications antennas 3 and 11 is configured to be capable of performing wireless communication through Wi-Fi or the like even with a mobile information terminal 5 (see FIG.1) such as a tablet-type personal computer used by the user.

The frequency band used for each of the wireless communications may be the same or different from each other. Furthermore, for example, the mobile information terminal 5 is configured with a tablet-type personal computer including a touchscreen, etc., so that the mobile information terminal 5 is capable of displaying various kinds of information on the touchscreen, and various kinds of information can be input by operating the touchscreen. It is possible that the mobile information terminal 5 is carried and used by the user outside the work vehicle 1, and it is also possible that the mobile information terminal 5 is mounted on the side, etc., of the driver's seat of the work vehicle 1 and used.

The communications antennas 3 and 11 enable transmission and reception of information to be performed between the work vehicle 1 and the reference station device 10 on a real-time basis. Furthermore, it is possible to remotely operate the work vehicle 1 by use of the mobile information terminal 5 on which predetermined application software is executed.

The control unit 4, which is provided in the work vehicle 1, executes predetermined computer software, so as to execute the later-explained mobile station positioning process, azimuth angle specifying process, automated driving control, and the like.

The mobile station positioning process executed by the control unit 4 on the work vehicle 1 side is configured as a process for calculating mobile station positioning information that indicates the latitude and longitude, etc., of the current position of the work vehicle 1, which is a mobile station. In the present mobile station positioning process, the positioning antenna 2 installed on the work vehicle 1 executes positioning based on a positioning signal received from a positioning satellite 7 and correction information received from the reference station device 10, so as to calculate the mobile station positioning information.

For example, various kinds of positioning methods, such as a Differential Global Positioning System positioning method (DGPS positioning method) and a real-time kinematic Global Positioning System positioning method (RTK-GPS positioning method), may be applied as the positioning performed in the mobile station positioning process. For example, the control unit 4 repeatedly executes positioning by the mobile station positioning process every few seconds and sequentially saves the mobile station positioning information obtained by each positioning in association with the time information at the time of positioning.

The azimuth angle specifying process executed by the control unit 4 on the work vehicle 1 side is configured as a process for calculating the azimuth angle of the work vehicle 1. In the present azimuth angle specifying process, the azimuth angle of the work vehicle 1 is calculated, based on the state of change in the mobile station positioning information, which is obtained by the positioning in the mobile station positioning process as the work vehicle 1 moves.

For example, in the azimuth angle specifying process, when the current mobile station positioning information is obtained in the mobile station positioning process, the most recently saved mobile station positioning information is referred to. Then, the direction of the velocity vector from the most recent mobile station positioning information toward the current mobile station positioning information can be specified as the azimuth angle of the work vehicle 1. Note that, although the saved mobile station positioning information obtained by the positioning in the most recent mobile station positioning process may be used as the above-described most recent mobile station positioning information, it is also possible to use mobile station positioning information obtained by point positioning or entered by the user at such a timing where the work vehicle 1 starts driving, for example.

For example, the control unit 4 sequentially specifies the azimuth angle of the work vehicle 1 each time positioning is executed in the mobile station positioning process, and the azimuth angle of the work vehicle 1 obtained thereby is sequentially saved in association with the time information at the time of specifying the azimuth angle.

The automated driving control executed by the control unit 4 on the work vehicle 1 side is configured as a process for executing automated driving of the work vehicle 1. In the present automated driving control, mobile station positioning information obtained by the positioning in the mobile station positioning process is used to execute automated driving of the work vehicle 1 along a predetermined target driving route.

For example, information of a target driving route, etc., which is required for automated driving of the work vehicle 1, is generated by the user with the mobile information terminal 5, and the information is transmitted to the work vehicle 1 side and saved. Then, in the automated driving control, the azimuth angle of the work vehicle 1 specified in the azimuth angle specifying process, the posture of the work vehicle 1 measured by an inertial measurement unit (IMU), which includes a three-axis gyro and a three-direction accelerometer, etc., are referred to as appropriate, so that various kinds of devices such as an engine control device, a transmission device, and a steering device mounted on the work vehicle 1 are automatically controlled. With the present automatic control, automated driving of the work vehicle 1 is executed such that the current position of the work vehicle 1, which is indicated by the mobile station positioning information obtained in the positioning by the mobile station positioning process, follows a target driving route received from the mobile information terminal 5.

The control unit 30 equipped in the reference station device 10 executes predetermined computer software, so as to execute the later-explained reference station positioning process, reference station registration process, correction information generation process, etc.

The reference station positioning process executed by the control unit 30 on the reference station device 10 side is configured as a process for calculating reference station positioning information that indicates the latitude and longitude, etc., of the current position of the reference station device 10, which is a reference station. In the present reference station positioning process, the positioning antenna 19 installed on the reference station device 10 executes positioning based on a positioning signal received from a positioning satellite 7, so as to calculate the reference station positioning information.

Specifically, in the positioning performed in the reference station positioning process, positioning signals received from multiple positioning satellites 7 by one positioning antenna 19 are analyzed, and, based on the propagation times of the respective positioning signals, the distances between the positioning antenna 19 and the respective positioning satellites 7 are calculated. By analyzing the distances from the respective positioning satellites 7 obtained in such a way, it is possible to calculate the reference station positioning information that indicates the current position of the reference station device 10 equipped with the positioning antenna 19. For example, as for the positioning performed in the reference station positioning process, a point positioning method is applied, so that positioning signals received from multiple positioning satellites 7 by one positioning antenna 19 are analyzed, and, based on the propagation times of the respective positioning signals, the distances between the positioning antenna 19 and the respective positioning satellites 7 are calculated.

The reference station registration process executed by the control unit 30 on the reference station device 10 side is configured as a process for registering reference station installation position information that indicates the latitude and longitude, etc., of the installation position of the reference station device 10 that is installed at a fixed position. For example, in a case where the reference station device 10 is newly installed or the installation position of the reference station device 10 is changed, registration of the reference station installation information is executed in the reference station registration process. Furthermore, the reference station registration process is configured such that an automatic registration process for calculating and automatically registering the installation position of the reference station device 10 can be executed on the reference station device 10 side, so as to ensure registration of accurate reference station installation position information while omitting manual inputting work.

The correction information generation process executed by the control unit 30 on the reference station device 10 side is configured as a process for generating correction information for a positioning signal received from a positioning satellite 7. In the present correction information generation process, correction information for a positioning signal received from a positioning satellite 7 is generated, based on the positioning signal, which is received from the positioning satellite 7 by the positioning antenna 19 installed on the reference station device 10, and the reference station installation position information, which is registered in advance in the reference station registration process.

In addition, for example, the control unit 30 on the reference station device 10 side repeatedly generates correction information by the correction information generation process every few seconds, so as to transmit the generated correction information to the work vehicle 1 side via the communications antennas 3 and 11 on a real-time basis. Then, the control unit 4 on the work vehicle 1 side utilizes correction information received from the reference station device 10 side for the positioning in a differential positioning method or a real-time kinematic positioning method performed in the mobile station positioning process.

For example, in the mobile station positioning process on the work vehicle 1 side, in a case where positioning is performed in a differential positioning method, the difference data of the installation position of the reference station device 10 is generated as correction data and transmitted to the work vehicle 1 side in the correction information generation process of the reference station device 10, which is the target for which the correction information is obtained. The above-described difference data is data related to the difference between the installation position of the reference station device 10 indicated by the reference station positioning information obtained in the positioning in the reference station positioning process and the installation position of the reference station device 10 indicated by the reference station installation position information registered in advance in the reference station registration process.

Then, in the mobile station positioning process on the work vehicle 1 side, point positioning is executed along with performing positioning in a differential positioning method, so that the current position of the work vehicle 1 is calculated, and the current position obtained in the point positioning is corrected by use of the difference data received from the reference station device 10 side. With the present correction, it is possible to calculate the mobile station positioning information that indicates the latitude and longitude, etc., of the accurate current position of the work vehicle 1.

Furthermore, in the mobile station positioning process on the work vehicle 1 side, in a case where positioning is performed in a real-time kinematic positioning method, reference station installation position information and phase data are generated as correction data and transmitted to the work vehicle 1 side in the correction information generation process of the reference station device 10, which is the target for which the correction information is obtained. The reference station installation position information is information related to the reference station installation position registered in advance in the reference station registration process. The phase data is data related to the phase of a positioning signal received by the positioning antenna 19 on the reference station device 10 side.

Then, in the mobile station positioning process on the work vehicle 1 side, in a case where positioning is performed in a real-time kinematic positioning method, the phase data of a positioning signal received by the positioning antenna 2 on the work vehicle 1 side and the phase data of a positioning signal received by the positioning antenna 19 on the reference station device 10 side are analyzed on a rea-time basis. By the present analysis, the positional relationship of the current position of the work vehicle 1 relative to the installation position of the reference station device 10 is calculated, and, based on the relative positional relationship and the reference station installation position information, the mobile station positioning information that indicates the latitude and longitude, etc., of the accurate current position of the work vehicle 1 is calculated.

Note that, although an example in which the reference station device 10 according to the present invention is utilized in an automated driving system is explained in the present embodiment, the use of the reference station device 10 is not limited as such. In addition, the contents of each of the processes such as positioning processes performed in the automated driving system may be changed as appropriate.

### (Reference Station Device)

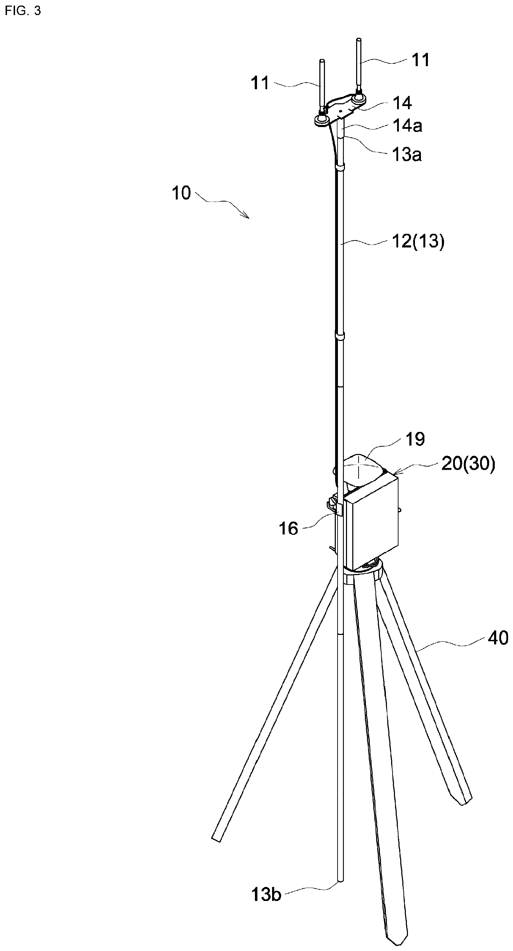

Next, an explanation is given of the configuration of the reference station device 10 of the present embodiment. As illustrated in FIG.3, the reference station device 10 includes the communications antennas 11, the positioning antenna 19, and the control unit 30. The communications antennas 11 perform wireless communication with the work vehicle 1, which operates as a mobile station. The positioning antenna 19 receives a positioning signal from a positioning satellite 7. The control unit 30 controls operation of the positioning antenna 19 and the communications antennas 11.

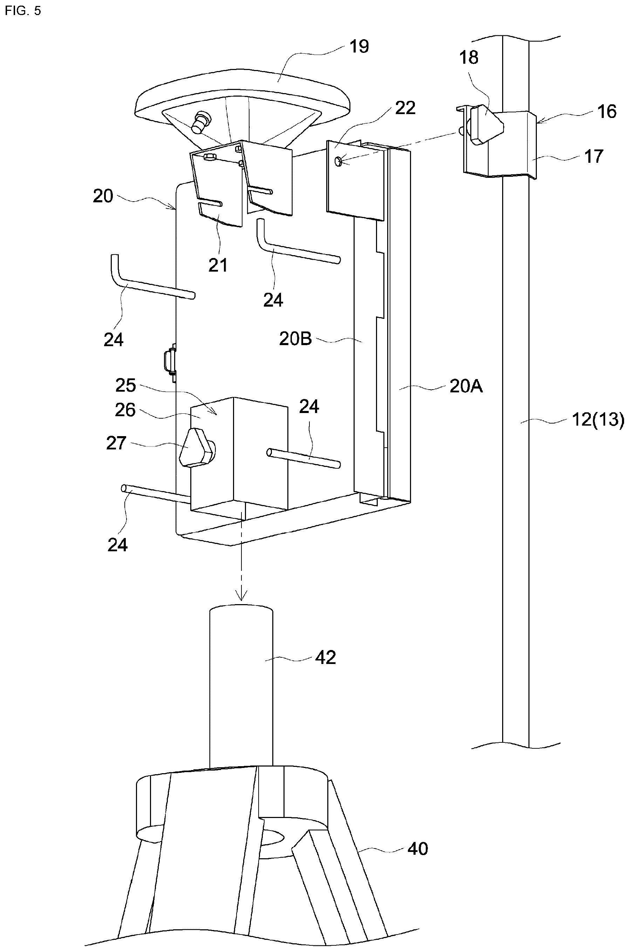

As illustrated in FIG. 5 through FIG.8, the reference station device 10 is provided with a reference station body 20 supported by a support leg 40 configured with a tripod or the like, provided upright on the ground surface. The control unit 30 and the positioning antenna 19 are attached to the present reference station body 20. As for the positioning antenna 19, which has a relatively heavy weight of about 2 kilograms, there is such a problem that the positioning antenna 19 is not stable if installed at a high position. Therefore, in the present embodiment, the positioning antenna 19 is directly attached to the reference station body 20 together with the control unit 30, so that the positioning antenna 19 is stably installed at a relatively low position, which is about 1 meter high, on the axis of the center of gravity of the support leg 40. Therefore, positioning with high precision becomes possible.

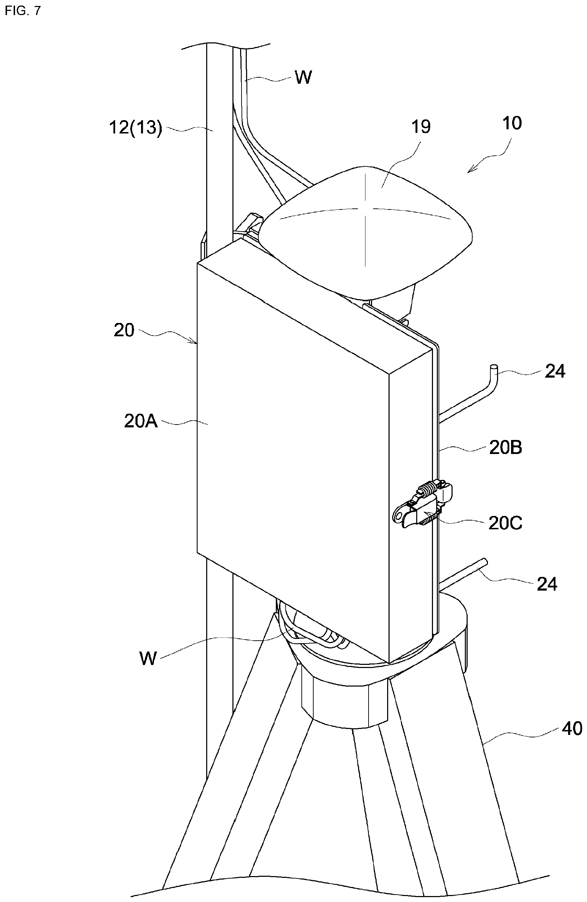

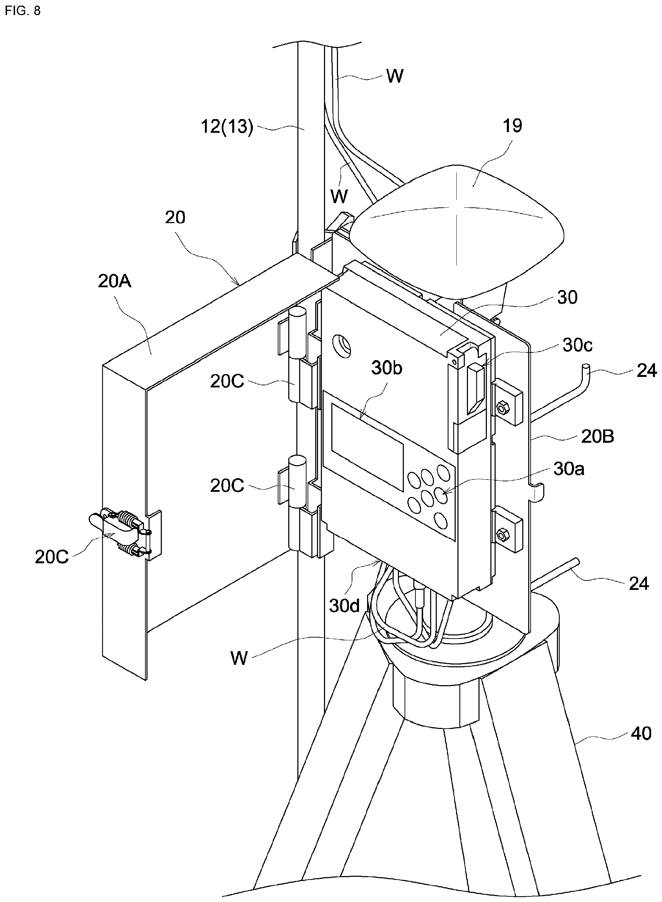

As illustrated in FIG.7 and FIG.8, the reference station body 20 interiorly houses the control unit 30 and is configured with a substantially box-shaped casing having an opening and closing door 20A, which can open and close the front surface side of the control unit 30. The casing, which configures the reference station body 20, is configured to have a base plate 20B, which is supported by the support leg 40 and the control unit 30 is fixed to the front surface thereof, and the box-shaped opening and closing door 20A, which is placed on the front surface side of the base plate 20B. The positioning antenna 19 is attached to the bracket 21, which is fixed to the upper end part of the back surface of the base plate 20B by a screw as illustrated in FIG.5.

The side edge part of the opening and closing door 20A and the side edge part of the base plate 20B are connected via hinges 20C, which are placed at upper and lower positions, as illustrated in FIG.8. Furthermore, the opening and closing door 20A can be opened or closed by changing postures between an opened state (see FIG.8), in which the opening and closing door 20A has swung sideward from the front surface of the base plate 20B, and a closed state (see FIG.7), in which the opening and closing door 20A is adjacent to the front surface of the base plate 20B. Therefore, in a case where the opening and closing door 20A is in an opened state as illustrated in FIG.8, it is possible to easily operate the operation unit 30a, such as a key switch and a power supply switch provided on the front surface of the control unit 30, and check the display unit 30b, such as a liquid crystal display. On the other hand, in a case where the opening and closing door 20A is in a closed state, the front surface of the control unit 30 is covered by the box-shaped opening and closing door 20A, so that it is possible to prevent the control unit 30 from being erroneously operated and preferably avoid the control unit 30 from deteriorating due to sunlight or from breaking due to rain or dust, etc.

On a side surface of the control unit 30, a battery 30c for power supply is attached. It is possible to replace the battery 30c when the opening and closing door 20A is in an opened state. Furthermore, on the bottom surface of the control unit 30, a connector 30d for connecting a wire W between the positioning antenna 19 and the communications antennas 11, etc., is provided. In addition, since the bottom part of the opening and closing door 20A is open, the wire W connected to the connector 30d does not interfere with the opening and closing door 20A during the opening and closing operation. Moreover, the lower end part of the opening and closing door 20A in a closed state exists in front of the connector 30d, and the lower end part of the base plate 20B exists behind the connector 30d. Accordingly, the wire W is not easily detached from the connector 30d even in a case where the reference station body 20 falls.

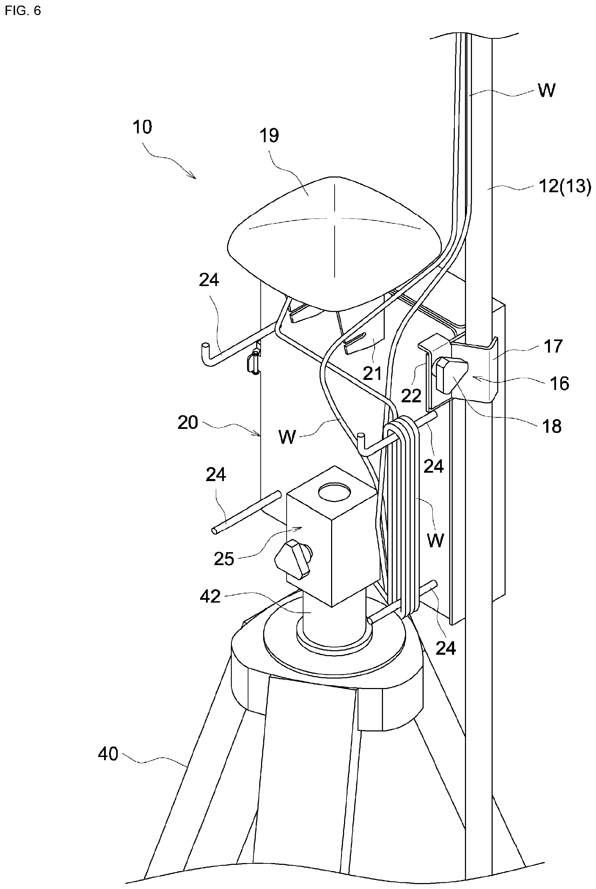

As illustrated in FIG.6, on the back surface of the base plate 20B of the reference station body 20, there is provided a wire winding part 24 configured with a stick-shaped object, around which the wire W connected to the positioning antenna 19 and the communications antennas 11 can be wound. Therefore, a wire W that is detached from the positioning antenna 19 and the communications antennas 11 or an extra wire W can be wound around the wire winding part 24, so as not to be disturbing during transportation.

As illustrated in FIG.5 and FIG.6, the reference station body 20 is provided with a support leg mounting part 25 to be detachably attached to the support leg 40. The support leg mounting part 25 includes a square tubular-shaped sleeve part 26 fixed to the back surface side of the base plate 20B of the reference station body 20. The reference station body 20 is attached to the upper end part of the support leg 40 such that the sleeve part 26 is engaged from above onto the cylinder-shaped body attachment pole 42, which is fixed to the upper end part of the support leg 40. Furthermore, the sleeve part 26 is provided with a fixing screw 27 for fixing the body attachment pole 42, which is inserted into the sleeve part 26. By loosening the fixing screw 27, the reference station body 20 can be detached from the support leg 40 for transportation. Furthermore, although a tripod is used as the support leg 40 in the present embodiment, another support leg such as a pile may be utilized, instead of a tripod, as long as the support leg includes the above-described body attachment pole 42.

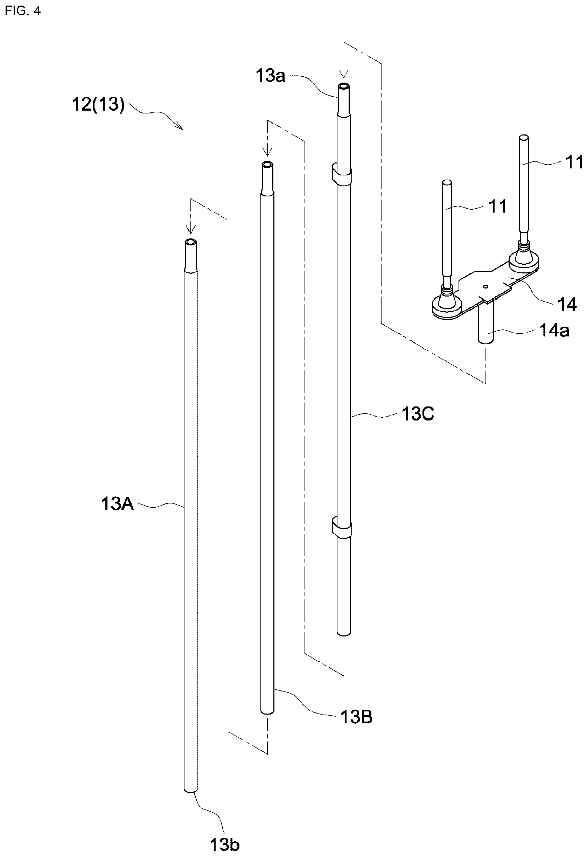

As illustrated in FIG.3 and FIG.4, the reference station device 10 is provided with a stick-shaped vertically-extending support stick 13 as a communications antenna support 12 for supporting the communications antennas 11 at an upper position relative to the reference station body 20. By holding the communications antennas 11 at a height of at least about 3 meters high, which is higher than the reference station body 20, by use of the support stick 13, it is possible to achieve preferable wireless communication with the communications antenna 3 on the work vehicle 1 side, in which communication failures due to shielding objects is suppressed.

A substantially T-shaped bracket 14 is attached to the upper end part of the support stick 13. On the other hand, a relatively strong magnet is attached to the bottoms of the communications antennas 11. Accordingly, the pair of communications antennas 11 are magnetically fixed to both end parts of the upper surface of the bracket 14, which is attached to the upper end part of the support stick 13.
A sleeve part 14a is provided at the central part of the bottom surface of the bracket 14. The communications antennas 11 are detachably attached to the upper end part of the support stick 13 such that the sleeve part 14a is engaged onto the pole-shaped insertion part 13a formed at the upper end part of the support stick 13.

As illustrated in FIG.4, the support stick 13 is configured with three stick-shaped support stick members 13A, 13B, and 13C, which are engaged and connected with each other and each of which has a length of about 1 meter. Accordingly, the support stick 13 can be divided into each of the support stick members 13A, 13B, and 13C, so as to be transported in a compact state.

As illustrated in FIG.3, FIG.5, and FIG.6, the reference station device 10 is provided with a communications antenna mounting part 16 for detachably attaching the support stick 13, which configures the communications antenna support 12, to the reference station body 20. Furthermore, the communications antenna mounting part 16 is configured to be able to hold the support stick 13, which is provided on a side of the reference station body 20, such that the lower end part 13b of the support stick 13 is in contact with the ground surface.

Specifically, the communications antenna mounting part 16 is configured with a base plate 22, a holding member 17, and a fixing screw 18. The base plate 22 is fixed to a side edge part of the base plate 20B of the reference station body 20. The holding member 17 is placed to face the base plate 22. The fixing screw 18 makes the holding member 17 fastened such that the holding member 17 is adjacent to the base plate 22. Accordingly, the fixing screw 18 is screwed in such a state where the support stick 13 is placed between the base plate 22 and the holding member 17 with the lower end part 13b of the support stick 13 being in contact with the ground surface, so that the support stick 13, whose lower end part 13b is in contact with the ground surface, is fixed along a side surface part of the reference station body 20. That is, in the present configuration, a cylindrical space provided for the reference station body 20 and extending in the vertical direction is formed between the base plate 22 and the holding member 17, which is fixed to the base plate 22 by the fixing screw 18. Accordingly, the support stick 13 is inserted to the cylindrical space on a side of the reference station body 20 so as to penetrate the cylindrical space in a standing posture, so that the support stick 13 is held such that the lower end part 13b thereof is in contact with the ground surface on a side of the reference station body 20. By holding the support stick 13 in this way, it is possible to stabilize the posture of the support stick 13 and the communications antennas 11, which are attached to the upper end part of the support stick 13, while the communications antennas 11 are supported at an appropriate height.

Furthermore, since the lower end part 13b of the support stick 13 is in contact with the ground surface, the load of the support stick 13 and the communications antennas 11 is transmitted to the ground surface, not to the reference station body 20. Therefore, the postures of the reference station body 20 as well as the positioning antenna 19 attached to the reference station body 20 are stabilized, so that it is possible to prevent the reference station body 20 from falling and further improve the precision of positioning by the positioning antenna 19. In addition, by loosening the fixing screw 18, the support stick 13 can be easily detached from the reference station body 20 and transported separately from the reference station body 20.

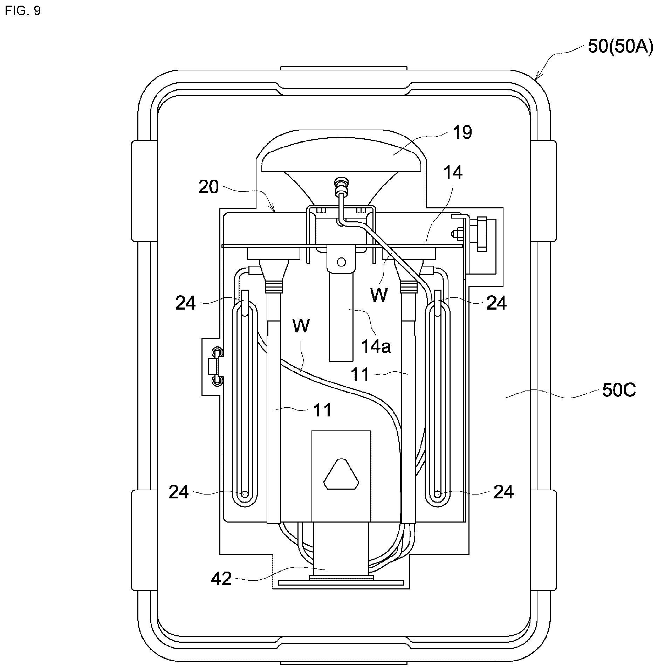

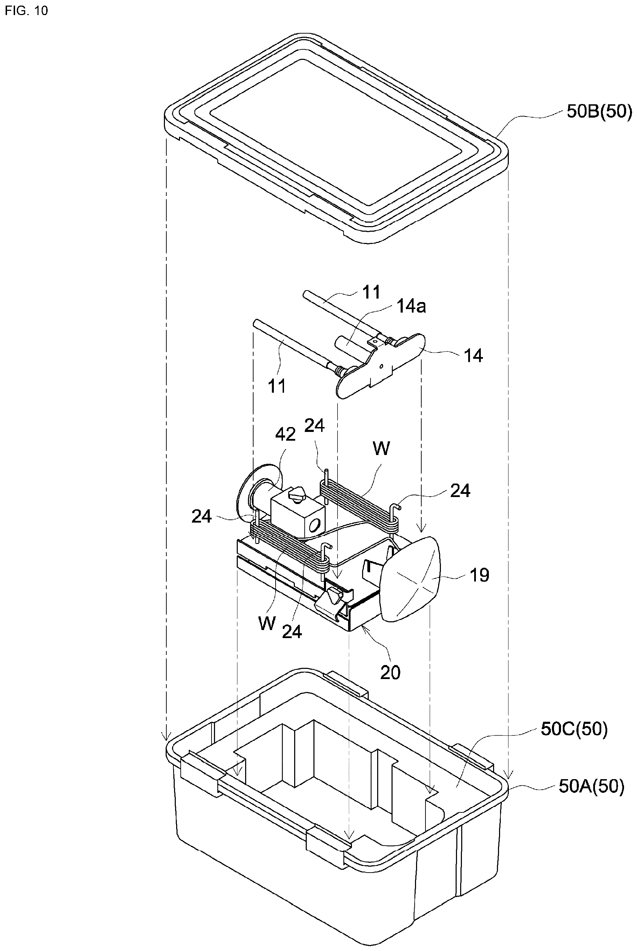

As explained above, regarding the reference station device 10, it is possible to detach the reference station body 20, to which the control unit 30 and the positioning antenna 19 are attached, from the support leg 40. Furthermore, it is possible to transport the reference station body 20 in such a state where the support stick 13, which functions as the communications antenna support 12 to which the communications antennas 11 are attached, is detached from the reference station body 20. Moreover, the communications antennas 11 can also be detached from the support stick 13 for transportation. Additionally, the reference station body 20, the communications antennas 11, and the bracket 14 to which the communications antennas 11 are fixed, can be stored in a predetermined storage box 50 for transportation, as illustrated in FIG.9 and FIG. 10. Such a storage box 50 is configured with a box body 50A, which is in a shape of a rectangular container, a lid member 50B, which is able to close the upper surface opening part of the box body 50A, and a filling material 50C, with which the interior of the box body 50A is defined as a space having a desired shape. Accordingly, in the space defined by the filling material 50C inside the box body 50A, the reference station body 20 can be stored in a laid-down state, and the bracket 14 and the communications antennas 11 fixed to the bracket 14 can be stored in an overlaid state on the reference station body 20. Additionally, when stored in the box body 50A as described above, the communications antennas 11 are magnetically attached to both end parts of the bracket 14 on the surface from which the sleeve part 14a protrudes. Therefore, the necessary storage space can be compact, compared to a case where, as in a state when used, the communications antennas 11 are magnetically attached to the both end parts of the bracket 14 on the opposite surface of the surface from which the sleeve part 14a protrudes.

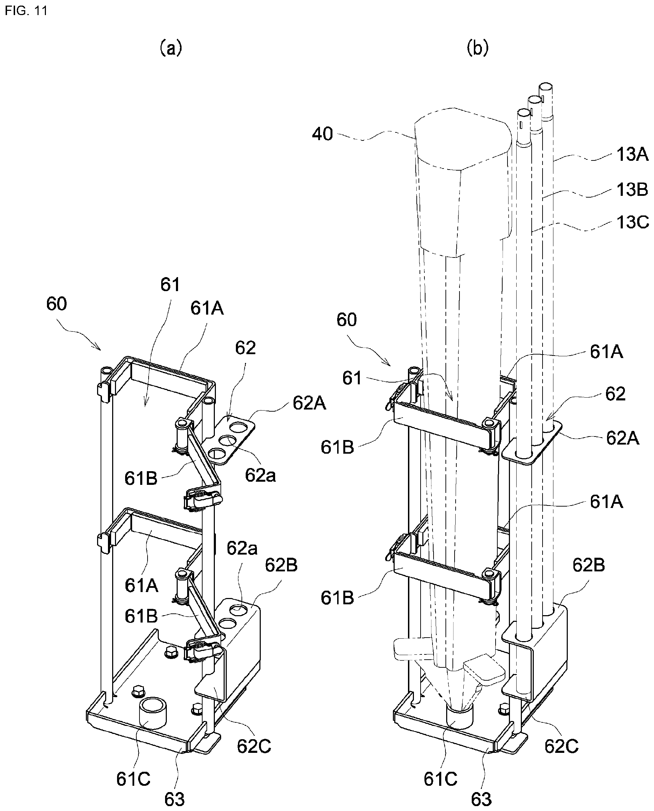

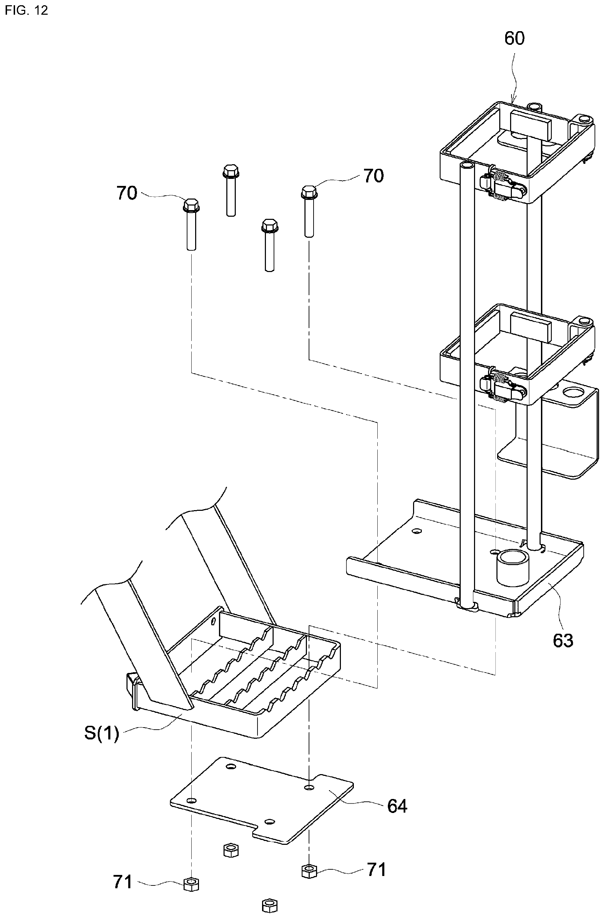

Furthermore, as illustrated in FIGS.11A and B and FIG.12, the support leg 40 from which the reference station body 20 is detached and the support stick 13 for supporting the communications antennas 11 can be stored in a storage frame 60 that is attached to a step S provided on the work vehicle 1 at the time of transportation. Such a storage frame 60 includes a support leg storage part 61, in which the support leg 40 can be stored in an upstanding posture, and a support stick member storage part 62, in which the support stick 13 that is divided into the three support stick members 13A, 13B, and 13C can be stored such that each of the support stick members 13A, 13B, and 13C is in an upstanding posture.

The support leg storage part 61 is configured with a fixed frame 61A, which is fixed on the back surface side, an opening and closing frame 61B, which is supported in an openable/closable state on the front surface side of the fixed frame 61A, and a cylinder-shaped tip support 61C, which is provided at a lower position, relative to the fixed frame 61A and the opening and closing frame 61B. Further, for storing the support leg 40 in the support leg storage part 61, first, the opening and closing frame 61B is opened, as illustrated in FIG.11A. Then, the support leg 40 is leaned against the front surface of the fixed frame 61A in an upstanding posture in such a state where the lower end part of the support leg 40 is inserted to the tip support 61C. Subsequently, the opening and closing frame 61B is closed, as illustrated in FIG.11B. In this state, the support leg 40 is stably held in an upstanding posture.

On the other hand, the support stick member storage part 62 includes the two support plates 62A and 62B, which are placed apart from each other in the vertical direction, and, in these support plates 62A and 62B, there are formed three through-holes 62a in which the support stick members 13A, 13B, and 13C are respectively inserted in the vertical direction. In addition, at a lower position of the lower support plate 62B, there is provided a tip support plate 62C, with which the lower end parts of the support stick members 13A, 13B, and 13C, which are inserted to the through-holes 62a, make contact. Furthermore, for storing the support stick members 13A, 13B, and 13C in the support stick member storage part 62, the support stick members 13A, 13B, and 13C are inserted into the respective through-holes 62a of the upper and lower support plates 62A and 62B from above, as illustrated in FIG.11B. Subsequently, the lower end parts of the support stick members 13A, 13B, and 13C are made to be in contact with the tip support plate 62C. In this state, the support stick members 13A, 13B, and 13C are stably held in upstanding postures. Note that, the lower support plate 62B and the tip support plate 62C are integrally configured via a plate-shaped member having a U-shaped cross section.

This storage frame 60 is fixed to the step S of the work vehicle 1, as illustrated in FIG.12. That is, the step S is held between a bottom plate 63, above which the tip support 61C of the support leg storage part 61 is formed, and a holding plate 64, which is on the bottom surface side of the bottom plate 63 and can be fixed with a bolt 70 and a nut 71. Therefore, the storage frame 60 can be easily attached to and detached from the step S.

### (Other Embodiments)

Explanations are given of other embodiments of the present invention. Note that the configuration of each embodiment explained below can be applied not only independently but also in combination with the configuration of another embodiment.

(1) In the above-described embodiment, the reference station body 20 is configured with a substantially box-shaped casing, which includes the opening and closing door 20A that can open and close the front surface side of the control unit 30. However, the configuration of the reference station body 20 may be modified as appropriate. For example, it is also possible that the opening and closing door 20A is omitted, so that the front surface side of the control unit 30 is open.
(2) In the above-described embodiment, the support stick 13, which functions as the communications antenna support 12 for supporting the communications antennas 11 at an upper position relative to the reference station body 20, is configured to be held by the reference station body 20 such that the lower end part 13b thereof is in contact with the ground surface. However, for example, there may be such a configuration in which the lower end part 13b of the support stick 13 is floating, not making contact with the ground surface, or a configuration in which the lower end part 13b of the support stick 13 is held by the support leg 40.
(3) Although the reference station body 20 is configured with the support leg mounting part 25 to be detachably attached to the support leg 40, provided upright on the ground surface in the above-described embodiment, it is also possible that the reference station body 20 and the support leg 40 are configured to be inseparably integrated, for example. Furthermore, in a case where this configuration is adopted, it is possible to easily transport the support leg 40 in a compact state if the support leg 40 is configured to be foldable.

### INDUSTRIAL APPLICABILITY

The present invention can be applied to a reference station device, etc., that is utilized for an automated driving system.

### DESCRIPTION OF REFERENCE NUMERALS

- 1: work vehicle (mobile station)
- 7: positioning satellite
- 10: reference station device
- 11: communications antennas
- 12: communications antenna support
- 13: support stick
- 13A: support stick member
- 13b: lower end part
- 16: communications antenna mounting part
- 19: positioning antenna
- 20: reference station body
- 20A: opening and closing door
- 25: support leg mounting part
- 30: control unit
- 40: support leg

## Claims

1. A reference station device including a communications antenna for performing wireless communication with a mobile station, a positioning antenna for receiving a positioning signal from a positioning satellite, and a control unit for controlling operation of the positioning antenna and the communications antenna, the reference station device comprising:
a reference station body supported on a ground surface, with the control unit and the positioning antenna being attached to the reference station body;
a communications antenna support configured to support the communications antenna at an upper position compared to the reference station body; and
a communications antenna mounting part configured to detachably attach the communications antenna support to the reference station body.

2. The reference station device according to claim 1, wherein the reference station body interiorly houses the control unit and includes an opening and closing door which is able to open and close a front surface side of the control unit.

3. The reference station device according to claim 1 or 2,
wherein the communications antenna support includes a support stick extending in a vertical direction and the communications antenna is detachably attached to an upper end part of the support stick, and
wherein the communications antenna mounting part is able to hold the support stick, which is provided on a side of the reference station body and whose lower end part is in contact with the ground surface.

4. The reference station device according to any one of claims 1 through 3, wherein the reference station body includes a support leg mounting part detachably attached to a support leg provided upright on the ground surface.
